(19) Europäisches Patentamt European Patent Office Office européen des brevets

(11) **EP 4 564 126 B1**

(12) **FASCICULE DE BREVET EUROPEEN**

(45) Date de publication et mention de la délivrance du brevet:
**29.07.2026 Bulletin 2026/31**

(21) Numéro de dépôt: **24214080.4**

(22) Date de dépôt: **20.11.2024**

(51) Classification Internationale des Brevets (IPC):
**G06F 1/08** (2006.01)

(52) Classification Coopérative des Brevets (CPC):
**G06F 1/08**

(54) **SYSTEME INFORMATIQUE CONFIGURÉ POUR RÉALISER UN DÉLAI D ATTENTE**

RECHNERSYSTEM MIT KONFIGURATION ZUR DURCHFÜHRUNG EINER STANDBY-VERZÖGERUNG

COMPUTER SYSTEM CONFIGURED TO PERFORM A WAIT TIME

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **01.12.2023 FR 2313465**

(43) Date de publication de la demande:
**04.06.2025 Bulletin 2025/23**

(73) Titulaire: **STMicroelectronics International N.V.**
**1228 Plan-les-Ouates, Geneva (CH)**

(72) Inventeur: **Cherbonnel, Philippe**
**35830 Betton (FR)**

(74) Mandataire: **Casalonga**
**Casalonga & Partners**
**Bayerstraße 71/73**
**80335 München (DE)**

(56) Documents cités:
**US-A- 5 367 689     US-A- 5 502 689**

# EP 4 564 126 B1

**Description**

Des modes de réalisation et de mises en œuvre concernent les systèmes informatiques, et plus particulièrement la temporisation d'une durée inférieure à une milliseconde par une unité centrale de traitement d'un tel système informatique.

Dans certaines applications, il est important de prévoir une solution permettant à une unité centrale de traitement d'un système informatique d'attendre un certain délai pendant l'exécution d'un programme d'ordinateur.

En particulier, un système informatique peut comprendre des périphériques pouvant être accédés par l'unité centrale de traitement. Par exemple, un périphérique du système informatique peut être un convertisseur analogique-numérique ou un comparateur analogique ou encore un régulateur de tension.

Ces périphériques peuvent présenter un temps de stabilisation de grandeurs physiques intrinsèques (par exemple une tension électrique). Le temps de stabilisation d'un périphérique correspond à une durée nécessaire pour que le périphérique atteigne un état stable après un changement de conditions ou une perturbation, par exemple lors du démarrage du périphérique.

Lorsque l'unité centrale de traitement souhaite accéder à un périphérique du système informatique, il est important de prévoir un délai d'attente afin de permettre l'accès au périphérique après la fin du temps de stabilisation de ce périphérique.

Généralement, le temps de stabilisation est inférieur à une milliseconde, notamment de l'ordre de quelques microsecondes à quelques dizaines de microsecondes.

Il est connu d'utiliser des solutions uniquement logicielles pour prévoir un délai d'attente en microsecondes. En particulier, une boucle logicielle peut être utilisée pour que l'unité centrale de traitement attende pendant une durée correspondant au délai d'attente.

En particulier, il est possible de prévoir un index pouvant être défini par la formule suivante :

$$IDX = \frac{DLY}{10} \times \frac{I\_CLK}{2 \times 100000} + 1,$$

où IDX est l'index, DLY est le délai en microsecondes et I_CLK est une variable globale correspondant à la fréquence d'une horloge interne de l'unité centrale de traitement.

La boucle logicielle comprend alors un test en début de boucle afin de déterminer si la valeur de l'index est différente de 0.

Si la valeur de l'index est différente de 0 alors la boucle logicielle comprend une décrémentation de l'index.

Lorsque la valeur de l'index atteint 0, alors le test de début de boucle permet de sortir de la boucle logicielle.

Une telle boucle logicielle repose alors uniquement sur une variable globale correspondant à la fréquence de l'horloge interne de l'unité centrale de traitement.

Le délai d'attente obtenu par la mise en œuvre d'une telle boucle logicielle présente alors l'inconvénient de dépendre de la compilation du code source permettant d'obtenir un code assembleur de la boucle logicielle.

En particulier, le nombres d'instructions pour réaliser la boucle logicielle peut varier selon la compilation effectuée. Ainsi, les délais d'attente pouvant être obtenus à partir de deux compilateurs différents peuvent varier de manière importante.

Une telle solution uniquement logicielle n'est donc pas précise. Il est alors généralement prévu de prévoir une marge d'attente pour éviter que le délai d'attente obtenu soit inférieur au délai d'attente souhaité. Cela entraîne une perte de temps pour réaliser un accès à un périphérique.

Par ailleurs, le système informatique peut comprendre un circuit d'horloge spécifique configuré pour gérer des durées multiples de la milliseconde (ordre de grandeur usuel pour des tâches de système informatique). On connaît notamment, dans l'architecture ARM Cortex-M, un tel circuit d'horloge appelé « Systick ». Néanmoins, un tel circuit d'horloge n'est pas adapté à lui seul pour gérer des durées en microsecondes inférieures à une milliseconde.

Pour gérer des délais en microsecondes inférieurs à une milliseconde, il est possible d'utiliser un circuit d'horloge dédié pour compter en microsecondes. Néanmoins, un tel circuit d'horloge présente l'inconvénient de monopoliser des ressources génériques du système informatique pour cette tâche précise.

Il existe donc un besoin de proposer une solution de temporisation permettant d'attendre de manière fiable pendant une durée en microsecondes inférieure à 1 milliseconde.

Selon un aspect, il est proposé un procédé de temporisation mis en œuvre par un système informatique comprenant :

- une unité centrale de traitement,
- un circuit d'horloge externe comprenant un compteur, le compteur étant configuré pour incrémenter ou décrémenter sa valeur à chaque coup d'horloge du circuit d'horloge externe sur une plage de valeurs correspondant à une

2

milliseconde,

le procédé de temporisation comprenant :

- une définition par l'unité centrale de traitement d'un nombre maximal de transitions d'un bit à surveiller de la valeur du compteur, le nombre maximal de transitions correspondant à un délai d'attente souhaité,
- une surveillance par l'unité centrale de traitement des transitions du bit à surveiller de la valeur du compteur de manière à réaliser ladite temporisation jusqu'à ce que le nombre de transitions réalisées du bit à surveiller atteigne le nombre maximal de transitions défini.

Un tel procédé permet d'attendre un délai inférieur à une milliseconde en surveillant un bit d'un compteur d'un circuit d'horloge externe. Le délai d'attente obtenu est alors indépendant du compilateur utilisé pour compiler le code source.

Un tel procédé permet ainsi d'améliorer la précision du délai d'attente obtenu.

En outre, la configuration du circuit d'horloge reste inchangée, par conséquent la solution d'attente en microsecondes est non invasive dans le système informatique.

Dans un mode de mise en œuvre avantageux, le délai d'attente souhaité correspond à un temps de stabilisation d'un périphérique du système informatique, ladite temporisation étant mise en œuvre lors d'un accès de l'unité centrale de traitement à ce périphérique.

De préférence, la surveillance des transitions du bit à surveiller comprend une définition d'un masque permettant d'isoler le bit à surveiller lorsque le masque est appliqué sur la valeur du compteur du circuit d'horloge externe.

Avantageusement, le nombre maximal de transitions du bit à surveiller est calculé par la formule :

$$IDX = \left( \left( DLY \times \frac{RLDV}{MSK} \right) \gg 11 \right) + 1,$$

où IDX est le nombre maximal de transitions, DLY est le délai souhaité en microsecondes, RLDV est la valeur de chargement du compteur CNT du circuit d'horloge externe EXT_CLK correspondant à une milliseconde et MSK est la valeur du masque du bit à surveiller.

Dans un mode de mise en œuvre avantageux, ledit nombre maximal de transitions est utilisé pour initialiser un index permettant de compter le nombre de transitions effectuées par le bit à surveiller du compteur du circuit d'horloge externe.

Avantageusement, la surveillance des transitions du bit à surveiller comprend une mise en œuvre d'une boucle principale tant que la valeur de l'index est différente de 0, la boucle principale comprenant :

- une décrémentation de la valeur de l'index,
- une première boucle secondaire mise en œuvre tant que la valeur du bit à surveiller est égale à 0,
- une deuxième boucle secondaire mise en œuvre tant que la valeur du bit à surveiller est égale à 1.

Selon un autre aspect, il est proposé un système informatique comprenant :

- une unité centrale de traitement,
- un circuit d'horloge externe comprenant un compteur, le compteur étant configuré pour incrémenter ou décrémenter sa valeur à chaque coup d'horloge du circuit d'horloge externe sur une plage de valeurs correspondant à une milliseconde,
- une mémoire stockant un programme d'ordinateur comprenant des instructions qui lorsqu'elles sont exécutées par l'unité centrale de traitement, conduisent celle-ci à :

- définir un nombre maximal de transitions d'un bit à surveiller de la valeur du compteur, le nombre maximal de transitions correspondant à un délai d'attente souhaité,
- surveiller des transitions du bit à surveiller de la valeur du compteur de manière à réaliser ladite temporisation jusqu'à ce que le nombre de transitions réalisées du bit à surveiller atteigne le nombre maximal de transitions défini.

Dans un mode de réalisation avantageux, le système informatique comporte en outre un périphérique présentant un temps de stabilisation, le programme d'ordinateur comprenant des instructions qui, lorsqu'elles sont exécutées par l'unité centrale de traitement, conduisent cette dernière à mettre en œuvre ladite temporisation lors d'un accès de l'unité centrale de traitement au périphérique, le délai d'attente souhaité de la temporisation correspondant au temps de stabilisation du périphérique.

De préférence, le programme d'ordinateur comprend des instructions qui, lorsqu'elles sont exécutées par l'unité centrale de traitement, conduisent cette dernière à définir et appliquer un masque sur la valeur du compteur du circuit d'horloge externe pour isoler le bit à surveiller afin de surveiller les transitions du bit à surveiller.

Avantageusement, le programme d'ordinateur comprend des instructions qui, lorsqu'elles sont exécutées par l'unité centrale de traitement, conduisent cette dernière à calculer le nombre maximal de transitions du bit à surveiller par la formule :

$$IDX = \left( \left( DLY \times \frac{RLDV}{MSK} \right) \gg 11 \right) + 1,$$

où IDX est le nombre maximal de transitions, DLY est le délai souhaité en microsecondes, RLDV est la valeur de chargement du compteur CNT du circuit d'horloge externe EXT_CLK correspondant à une milliseconde et MSK est la valeur du masque du bit à surveiller.

Dans un mode de réalisation avantageux, le programme d'ordinateur comprend des instructions qui, lorsqu'elles sont exécutées par l'unité centrale de traitement, conduisent cette dernière à utiliser ledit nombre maximal de transitions pour initialiser un index permettant de compter le nombre de transitions effectuées par le bit à surveiller du compteur du circuit d'horloge externe.

Avantageusement, le programme d'ordinateur comprend des instructions qui, lorsqu'elles sont exécutées par l'unité centrale de traitement, conduisent cette dernière à surveiller des transitions du bit à surveiller en mettant en œuvre une boucle principale tant que la valeur de l'index est différente de 0, la boucle principale comprenant :

- une décrémentation de la valeur de l'index,
- une première boucle secondaire mise en œuvre tant que la valeur du bit à surveiller est égale à 0,
- une deuxième boucle secondaire mise en œuvre tant que la valeur du bit à surveiller est égale à 1.

Selon un autre aspect, il est proposé un produit programme d'ordinateur comprenant des instructions qui lorsqu'elles sont mises en œuvre par une unité centrale de traitement d'un système informatique comportant également un circuit d'horloge externe comprenant un compteur, le compteur étant configuré pour incrémenter ou décrémenter sa valeur à chaque coup d'horloge du circuit d'horloge externe sur une plage de valeurs correspondant à une milliseconde, conduisent l'unité centrale de traitement à :

- définir un nombre maximal de transitions d'un bit à surveiller de la valeur du compteur, le nombre maximal de transitions correspondant à un délai d'attente souhaité,
- surveiller des transitions du bit à surveiller de la valeur du compteur de manière à réaliser ladite temporisation jusqu'à ce que le nombre de transitions réalisées du bit à surveiller atteigne le nombre maximal de transitions défini.

Dans un mode de réalisation avantageux, le produit programme d'ordinateur comprend des instructions qui, lorsqu'elles sont exécutées par l'unité centrale de traitement, conduisent cette dernière à mettre en œuvre ladite temporisation lors d'un accès de l'unité centrale de traitement à un périphérique du système informatique, le délai d'attente souhaité de la temporisation correspondant à un temps de stabilisation du périphérique.

D'autres avantages et caractéristiques de l'invention apparaîtront à l'examen de la description détaillée de modes de réalisation, nullement limitatifs, et des dessins annexés sur lesquels :

[Fig 1]
[Fig 2]

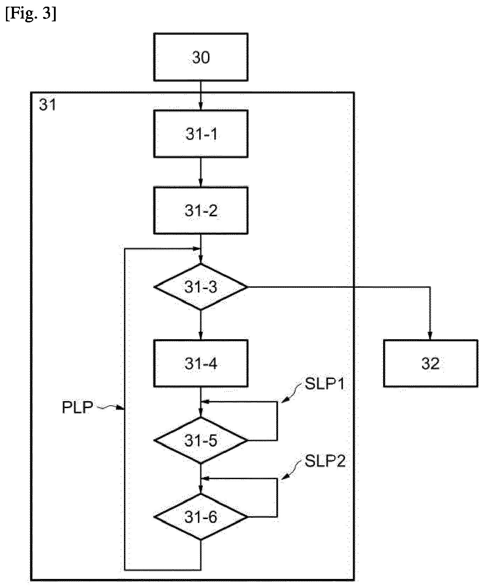

[Fig 3] illustrent des modes de réalisation et de mise en œuvre de l'invention.

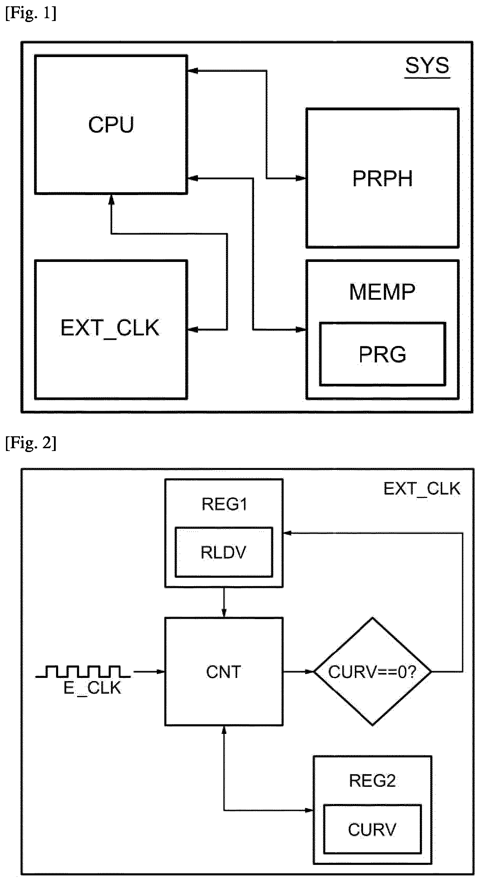

La figure 1 illustre un système informatique SYS. Le système informatique SYS comprend une unité centrale de traitement CPU, un circuit d'horloge externe EXT_CLK, une mémoire de programme MEMP et au moins un périphérique PRPH.

Le périphérique PRPH est un module électronique pouvant être accédé par l'unité centrale de traitement CPU. Le périphérique PRPH peut être un circuit analogique-numérique par exemple.

Le périphérique PRPH présente un temps de stabilisation. Ce temps de stabilisation correspond à la durée nécessaire pour que le périphérique atteigne un état stable après un changement de conditions ou une perturbation. Ce temps de stabilisation est généralement indiqué dans un document de description technique relatif à ce périphérique.

Le système informatique SYS peut présenter une architecture ARM Cortex-M. Dans ce cas, le circuit d'horloge externe EXT_CLK peut correspondre au circuit d'horloge appelé « Systick ».

Le circuit d'horloge « Systick » est habituellement utilisé pour gérer des temporisations en millisecondes.

La figure 2 illustre un mode de réalisation d'un circuit d'horloge externe EXT_CLK. Le circuit d'horloge externe EXT_CLK est configuré pour générer un signal d'horloge E_CLK correspondant à un signal périodique carré.

En particulier, ce signal d'horloge E_CLK peut présenter une fréquence comprise entre quelques centaines de kHz (kilohertz) à quelques centaines de MHz (mégahertz), par exemple de l'ordre de 100 MHz.

Le circuit d'horloge externe EXT_CLK comprend un premier registre configuré pour stocker une valeur de chargement RLDV.

Le circuit d'horloge externe EXT_CLK comprend également un compteur CNT. Le compteur CNT est configuré pour décrémenter sa valeur courante CURV à chaque coup d'horloge E_CLK.

La valeur initiale du compteur CNT est initialisée à la valeur de chargement RLDV. La valeur de chargement RLDV est choisie pour correspondre à la valeur pouvant être atteinte par le compteur en une milliseconde. En particulier, la valeur de chargement RLDV peut être déterminée par la formule suivante :

$$RLD\tilde{V} = \frac{F\_ECLK}{2 \times F\_CLK},$$

où RLDV est la valeur de chargement et F_ECLK est la fréquence du signal d'horloge et P_CLK est une fréquence d'horloge, typiquement égale à 1 kHz pour obtenir une période de 1 milliseconde.

Lorsque la valeur courante CURV du compteur CNT atteint zéro, le compteur CNT est configuré pour reprendre la valeur de chargement RLDV comme valeur courante au prochain coup d'horloge E_CLK.

Le circuit d'horloge externe EXT_CLK comprend également un deuxième registre (notamme le registre SYS_CVR dans l'architecture ARM Cortex-M) configuré pour stocker la valeur courante CURV du compteur CNT.

L'unité centrale de traitement CPU est configurée pour exécuter des instructions selon une fréquence d'une horloge interne (non représentée). La fréquence de l'horloge interne peut être comprise entre quelques centaines de kHz à quelques centaines de MHz, par exemple de l'ordre de 100 MHz.

L'unité centrale de traitement CPU est configurée pour pouvoir accéder à la valeur courante CURV du compteur du circuit d'horloge externe EXT_CLK.

L'unité centrale de traitement CPU est configurée pour exécuter un programme d'ordinateur PRG stocké dans la mémoire de programme MEMP.

Le programme d'ordinateur PRG comprend des instructions, qui lorsqu'elles sont exécutées par l'unité centrale de traitement CPU, conduisent celle-ci à accéder à un périphérique.

Le programme d'ordinateur PRG comprend également des instructions, qui lorsqu'elles sont exécutées par l'unité centrale de traitement CPU, conduisent celle-ci à mettre en œuvre un procédé de temporisation lors de l'accès au périphérique, afin notamment d'attendre pendant un délai correspondant au temps de stabilisation de ce périphérique. La figure 3 illustre un mode de mise en œuvre d'un tel procédé de temporisation.

Le programme d'ordinateur PRG comprend également des instructions, qui lorsqu'elles sont exécutées par l'unité centrale de traitement CPU, conduisent celle-ci à mettre en œuvre une fonction d'initialisation (étape 30 du procédé de temporisation).

Cette fonction d'initialisation est configurée pour définir la valeur de chargement du circuit d'horloge externe EXT_CLK à la valeur atteinte par le compteur en 1 milliseconde.

Le programme d'ordinateur PRG comprend également des instructions, qui lorsqu'elles sont exécutées par l'unité centrale de traitement CPU, conduisent celle-ci à mettre en œuvre une fonction de temporisation LL_uDLY permettant d'attendre un délai en microsecondes inférieur à une milliseconde (étape 31 du procédé de temporisation).

Cette fonction LL_uDLY est notamment mise en œuvre avant d'accéder à un périphérique PRPH, par exemple pour attendre un temps de stabilisation du périphérique PRPH. Un code en langage C de programmation correspond à un exemple d'implémentation de ladite fonction LL_uDLY est illustré en annexe 1.

Ladite fonction LL_uDLY est configurée pour recevoir en entrée un délai d'attente souhaité exprimé en microsecondes. Ce délai d'attente souhaité correspond par exemple au temps de stabilisation associé au périphérique accédé par l'unité centrale de traitement.

Ladite fonction LL_uDLY est configurée pour utiliser le circuit d'horloge externe EXT_CLK pour mesurer ledit délai en microsecondes.

En particulier, ladite fonction LL_uDLY est configurée pour surveiller un bit de la valeur courante CURV du compteur CNT du circuit d'horloge externe EXT_CLK afin de détecter un nombre de transitions de ce bit représentatif du délai en microsecondes.

Le bit à surveiller est choisi selon la fréquence des transitions de ce bit. En particulier, il est important de choisir un bit ayant des transitions selon une fréquence suffisamment inférieure à la fréquence de l'horloge interne de l'unité centrale de traitement CPU pour que cette dernière puisse détecter ces transitions.

Il est également important de choisir un bit ayant des transitions selon une fréquence suffisamment élevée par rapport au délai d'attente souhaité. Le bit à surveiller de la valeur courante CURV du compteur CNT peut par exemple être le quatrième bit de poids faible.

Afin de permettre cette surveillance, ladite fonction LL_uDLY est configurée pour définir un masque MSK (étape 31-1) permettant d'isoler le bit à surveiller lorsque le masque MSK est appliqué sur la valeur courante CURV du compteur CNT.

Ladite fonction LL_uDLY est également configurée pour initialiser un index IDX (étape 31-2) permettant de compter le nombre de transitions effectuées pour le bit surveillé. En particulier, cet index IDX est initialisé à une valeur correspondant au nombre de transitions représentatif du délai d'attente souhaité en microsecondes et est ensuite décrémentée à chaque détection d'une transition.

Ainsi, lorsque l'index IDX atteint 0 alors le délai attendu correspond au délai d'attente souhaité en microsecondes.

Cet index IDX est stocké dans une mémoire volatile (non illustrée), notamment une mémoire vive (« RAM » de l'anglais « Random-access memory ») de l'unité centrale de traitement CPU pendant la mise en œuvre de ladite fonction LL_uDLY.

Le calcul de la valeur initiale de l'index IDX est effectuée par l'unité centrale de traitement CPU lors de la mise en œuvre de ladite fonction LL_uDLY.

En particulier, la valeur initiale de l'index IDX est calculée en utilisant la formule suivante :

$$IDX = \left(\left(DLY \times \frac{RLDV}{MSK}\right) \gg 11\right) + 1,$$

où IDX est l'index, DLY est le délai souhaité en microsecondes, RLDV est la valeur de chargement du compteur CNT du circuit d'horloge externe EXT_CLK correspondant à une milliseconde et MSK est la valeur du masque du bit à surveiller.

Le décalage de 11 bits vers la droite est équivalent à une division par 2048 qui correspond à une approximation d'une division par 1000 multipliée par 2 (soit une division par 2000).

Ce décalage permet de convertir un délai en milliseconde en microsecondes, les transitions étant effectuée deux par deux (pour le bit surveillé, transition 1 vers 0 puis la transition 0 vers 1).

La valeur de chargement RLDV correspondant à la valeur atteinte par le compteur CNT en une milliseconde permet de faciliter le calcul de la valeur initiale de l'index IDX correspondant au délai d'attente souhaité.

La fonction LL_uDLY est ensuite configurée pour attendre le délai d'attente souhaité en effectuant une boucle principale PLP tant que la valeur de l'index est différente de 0.

Cette boucle principale PLP permet d'effectuer une surveillance des transitions du bit à surveiller et une mise à jour de l'index toutes les deux transitions détectées. La surveillance des transitions du bit à surveiller est effectuée en boucle par l'unité centrale de traitement CPU.

En particulier, la boucle principale PLP comprend tout d'abord un test 31-3 de la valeur de l'index afin de déterminer si cette valeur est égale à 0.

Si la valeur de l'index IDX est différente de 0, alors la boucle principale PLP met en œuvre des opérations pour surveiller les transitions du bit à surveiller et pour mettre à jour l'index.

En particulier, la boucle principale PLP comprend une décrémentation 31-4 de l'index IDX.

La boucle principale PLP comprend ensuite une première boucle secondaire SLP1 mise en œuvre tant que la valeur du bit à surveiller est égale à 0. Pour ce faire, ladite première boucle secondaire SLP1 applique le masque MSK sur la valeur courante du compteur du circuit d'horloge externe de manière à isoler la valeur du bit à surveiller et effectue un test 31-5 pour déterminer si la valeur obtenue par l'application du masque MSK est égale à 0.

Si la valeur obtenue par l'application du masque MSK est égale à 0, alors la première boucle secondaire SLP1 continue d'être exécutée. Si la valeur obtenue par l'application du masque MSK est différente de 0, alors la première boucle secondaire SLP1 est arrêtée.

La première boucle secondaire SLP1 permet ainsi de détecter une transition du bit surveillé de 0 à 1.

La boucle principale PLP comprend ensuite une deuxième boucle secondaire SLP2 mise en œuvre tant que la valeur du bit à surveiller est égale à 1. Pour ce faire, ladite deuxième boucle secondaire SLP2 applique le masque MSK sur la valeur courante CURV du compteur du circuit d'horloge externe EXT_CLK de manière à isoler la valeur du bit à surveiller et effectue un test 31-6 pour déterminer si la valeur obtenue par l'application du masque MSK est différente 0.

Si la valeur obtenue par l'application du masque MSK est différente de 0, alors la deuxième boucle secondaire SLP2 continue d'être exécutée. Si la valeur obtenue par l'application du masque MSK est égale à 0, alors la première boucle secondaire SLP1 est arrêtée.

La deuxième boucle secondaire SLP2 permet ainsi de détecter une transition du bit surveillé de 1 à 0.

Ensuite, la boucle principale PLP est réitérée tant que la valeur de l'index est différente de 0.

La boucle principale PLP est arrêtée une fois que la valeur de l'index IDX atteint 0 lors du test de début de la boucle principale PLP (étape 32).

L'arrêt de la boucle principale PLP marque la fin de ladite fonction LL_uDLY, et donc la fin de la temporisation.

Une telle fonction de temporisation est ainsi configurée pour exécuter une boucle principale PLP permettant de temporiser pendant une durée au moins sensiblement proche du délai d'attente souhaité en microsecondes.

Cette boucle principale PLP comprend une surveillance d'un bit du compteur du circuit d'horloge externe EXT_CLK. De la sorte, la durée temporisée ne dépend pas des cycles de l'unité centrale de traitement.

Ainsi, la durée temporisée ne dépend pas du compilateur ou des options de compilations choisies mais repose uniquement sur la surveillance d'un bit du compteur du circuit d'horloge externe EXT_CLK.

Une telle fonction de temporisation présente également l'avantage d'être précise, notamment lorsque la fréquence de l'horloge interne de l'unité centrale de traitement CPU est supérieure à 4 MHz.

ANNEXE

Exemple 1 d'un code source en langage C de la fonction de temporisation LL_uDLY :

```
void LL_uDLY(uint32_t DLY)
{
  uint32_t MSK = (1UL << 4U);
  uint32_t IDX = ((DLY * (SysTick->LOAD / MSK)) >> 11U) +
1U;
  while(IDX != 0)
  {
    IDX--;
    while((SysTick->VAL & MSK) == 0UL)
    {
    }
    while((SysTick->VAL & MSK) != 0UL)
    {
    }
  }
}
```

**Revendications**

1. Procédé de temporisation mis en œuvre par un système informatique (SYS) comprenant :

    - une unité centrale de traitement (CPU),
    - un circuit d'horloge externe (EXT_CLK) comprenant un compteur, le compteur (CNT) étant configuré pour incrémenter ou décrémenter sa valeur à chaque coup d'horloge du circuit d'horloge externe (EXT_CLK) sur une plage de valeurs correspondant à une milliseconde,

    le procédé de temporisation comprenant :

    - une définition par l'unité centrale de traitement d'un nombre maximal de transitions d'un bit à surveiller de la valeur du compteur (CNT), le nombre maximal de transitions correspondant à un délai d'attente souhaité,
    - une surveillance par l'unité centrale de traitement des transitions du bit à surveiller de la valeur du compteur (CNT) de manière à réaliser ladite temporisation jusqu'à ce que le nombre de transitions réalisées du bit à surveiller atteigne le nombre maximal de transitions défini.

**2.** Procédé selon la revendication 1, dans lequel le délai d'attente souhaité correspond à un temps de stabilisation d'un périphérique (PRPH) du système informatique (SYS), ladite temporisation étant mise en œuvre lors d'un accès de l'unité centrale de traitement (CPU) à ce périphérique (PRPH).

**3.** Procédé selon l'une quelconque des revendications 1 ou 2, dans lequel la surveillance des transitions du bit à surveiller comprend une définition d'un masque permettant d'isoler le bit à surveiller lorsque le masque est appliqué sur la valeur du compteur (CNT) du circuit d'horloge externe (EXT_CLK).

**4.** Procédé selon la revendication 3 dans lequel le nombre maximal de transitions du bit à surveiller est calculé par la formule : $IDX = \left(\left(DLY \times \frac{RLDV}{MSK}\right) \gg 11\right) + 1$, où IDX est le nombre maximal de transitions, DLY est le délai souhaité en microsecondes, RLDV est la valeur de chargement du compteur CNT du circuit d'horloge externe EXT_CLK correspondant à une milliseconde et MSK est la valeur du masque du bit à surveiller.

**5.** Procédé selon l'une des revendications 1 à 4 dans lequel ledit nombre maximal de transitions est utilisé pour initialiser un index permettant de compter le nombre de transitions effectuées par le bit à surveiller du compteur du circuit d'horloge externe.

**6.** Procédé selon la revendication 5, dans lequel la surveillance des transitions du bit à surveiller comprend une mise en œuvre d'une boucle principale (PLP) tant que la valeur de l'index est différente de 0, la boucle principale (PLP) comprenant :

- une décrémentation de la valeur de l'index (IDX),
- une première boucle secondaire (SLP1) mise en œuvre tant que la valeur du bit à surveiller est égale à 0,
- une deuxième boucle secondaire (SLP2) mise en œuvre tant que la valeur du bit à surveiller est égale à 1.

**7.** Système informatique comprenant :

- une unité centrale de traitement (CPU),
- un circuit d'horloge externe (EXT_CLK) comprenant un compteur (CNT), le compteur (CNT) étant configuré pour incrémenter ou décrémenter sa valeur à chaque coup d'horloge du circuit d'horloge externe (EXT_CLK) sur une plage de valeurs correspondant à une milliseconde,
- une mémoire (MEM) stockant un programme d'ordinateur (PRG) comprenant des instructions qui lorsqu'elles sont exécutées par l'unité centrale de traitement (CPU), conduisent celle-ci à :
- définir un nombre maximal de transitions d'un bit à surveiller de la valeur du compteur (CNT), le nombre maximal de transitions correspondant à un délai d'attente souhaité,
- surveiller des transitions du bit à surveiller de la valeur du compteur (CNT) de manière à réaliser ladite temporisation jusqu'à ce que le nombre de transitions réalisées du bit à surveiller atteigne le nombre maximal de transitions défini.

**8.** Système informatique selon la revendication 7, comportant en outre un périphérique (PRPH) présentant un temps de stabilisation, le programme d'ordinateur (PRG) comprenant des instructions qui, lorsqu'elles sont exécutées par l'unité centrale de traitement (CPU), conduisent cette dernière à mettre en œuvre ladite temporisation lors d'un accès de l'unité centrale de traitement (CPU) au périphérique (PRPH), le délai d'attente souhaité de la temporisation correspondant au temps de stabilisation du périphérique (PRPH).

**9.** Système informatique selon l'une quelconque des revendications 7 ou 8, dans lequel le programme d'ordinateur (PRG) comprend des instructions qui, lorsqu'elles sont exécutées par l'unité centrale de traitement (CPU), conduisent cette dernière à définir et appliquer un masque sur la valeur du compteur (CNT) du circuit d'horloge externe (EXT_CLK) pour isoler le bit à surveiller afin de surveiller les transitions du bit à surveiller.

**10.** Système informatique selon la revendication 9, dans lequel le programme d'ordinateur (PRG) comprend des instructions qui, lorsqu'elles sont exécutées par l'unité centrale de traitement (CPU), conduisent cette dernière à calculer le nombre maximal de transitions du bit à surveiller par la formule :

$$IDX = \left(\left(DLY \times \frac{RLDV}{MSK}\right) \gg 11\right) + 1,$$

où IDX est le nombre maximal de transitions, DLY est le délai souhaité en microsecondes, RLDV est la valeur de chargement du compteur CNT du circuit d'horloge externe EXT_CLK correspondant à une milliseconde et MSK est la valeur du masque du bit à surveiller.

11. Système informatique selon l'une des revendications 7 à 10, dans lequel le programme d'ordinateur (PRG) comprend des instructions qui, lorsqu'elles sont exécutées par l'unité centrale de traitement (CPU), conduisent cette dernière à utiliser ledit nombre maximal de transitions pour initialiser un index permettant de compter le nombre de transitions effectuées par le bit à surveiller du compteur (CNT) du circuit d'horloge externe.

12. Système informatique selon la revendication 11, dans lequel le programme d'ordinateur (PRG) comprend des instructions qui, lorsqu'elles sont exécutées par l'unité centrale de traitement (CPU), conduisent cette dernière à surveiller des transitions du bit à surveiller en mettant en œuvre une boucle principale (PLP) tant que la valeur de l'index est différente de 0, la boucle principale (PLP) comprenant :

- une décrémentation de la valeur de l'index,
- une première boucle secondaire (SLP1) mise en œuvre tant que la valeur du bit à surveiller est égale à 0,
- une deuxième boucle secondaire (SLP2) mise en œuvre tant que la valeur du bit à surveiller est égale à 1.

13. Produit programme d'ordinateur comprenant des instructions qui lorsqu'elles sont mises en œuvre par une unité centrale de traitement d'un système informatique comportant également un circuit d'horloge externe (EXT_CLK) comprenant un compteur (CNT), le compteur (CNT) étant configuré pour incrémenter ou décrémenter sa valeur à chaque coup d'horloge du circuit d'horloge externe (EXT_CLK) sur une plage de valeurs correspondant à une milliseconde, conduisent l'unité centrale de traitement à :

- définir un nombre maximal de transitions d'un bit à surveiller de la valeur du compteur (CNT), le nombre maximal de transitions correspondant à un délai d'attente souhaité,
- surveiller des transitions du bit à surveiller de la valeur du compteur (CNT) de manière à réaliser une temporisation jusqu'à ce que le nombre de transitions réalisées du bit à surveiller atteigne le nombre maximal de transitions défini.

14. Produit programme d'ordinateur selon la revendication 13, comprenant des instructions qui, lorsqu'elles sont exécutées par l'unité centrale de traitement (CPU), conduisent cette dernière à mettre en œuvre ladite temporisation lors d'un accès de l'unité centrale de traitement (CPU) à un périphérique (PRPH) du système informatique (SYS), le délai d'attente souhaité de la temporisation correspondant à un temps de stabilisation du périphérique (PRPH).

15. Produit programme d'ordinateur selon l'une quelconque des revendications 13 ou 14, comprenant des instructions qui, lorsqu'elles sont exécutées par l'unité centrale de traitement (CPU), conduisent cette dernière à définir et appliquer un masque sur la valeur du compteur (CNT) du circuit d'horloge externe (EXT_CLK) pour isoler le bit à surveiller afin de surveiller les transitions du bit à surveiller.

16. Produit programme d'ordinateur selon la revendication 15, comprenant des instructions qui, lorsqu'elles sont exécutées par l'unité centrale de traitement (CPU), conduisent cette dernière à calculer le nombre maximal de transitions du bit à surveiller par la formule :

$$IDX = \left( \left( DLY \times \frac{RLDV}{MSK} \right) \gg 11 \right) + 1,$$

où IDX est le nombre maximal de transitions, DLY est le délai souhaité en microsecondes, RLDV est la valeur de chargement du compteur CNT du circuit d'horloge externe EXT_CLK correspondant à une milliseconde et MSK est la valeur du masque du bit à surveiller.

17. Produit programme d'ordinateur selon l'une des revendications 13 à 16, comprenant des instructions qui, lorsqu'elles sont exécutées par l'unité centrale de traitement (CPU), conduisent cette dernière à utiliser ledit nombre maximal de transitions pour initialiser un index permettant de compter le nombre de transitions effectuées par le bit à surveiller du compteur (CNT) du circuit d'horloge externe.

18. Produit programme d'ordinateur selon la revendication 17, comprenant des instructions qui, lorsqu'elles sont exécutées par l'unité centrale de traitement (CPU), conduisent cette dernière à surveiller des transitions du bit à surveiller en mettant en œuvre une boucle principale (PLP) tant que la valeur de l'index est différente de 0, la boucle principale (PLP) comprenant :

- une décrémentation de la valeur de l'index,
- une première boucle secondaire (SLP1) mise en œuvre tant que la valeur du bit à surveiller est égale à 0,
- une deuxième boucle secondaire (SLP2) mise en œuvre tant que la valeur du bit à surveiller est égale à 1.

**Patentansprüche**

1. Zeitverzögerungsverfahren, das von einem Computersystem (SYS) implementiert wird, umfassend:

- eine zentrale Verarbeitungseinheit (CPU),
- einen externen Taktkreis (EXT_CLK), der einen Zähler umfasst, wobei der Zähler (CNT) so konfiguriert ist, dass er seinen Wert bei jedem Takt des externen Taktkreises (EXT_CLK) in einem Wertebereich, der einer Millisekunde entspricht, erhöht oder verringert,

wobei das Zeitverzögerungsverfahren Folgendes umfasst:

- eine Definition durch die zentrale Verarbeitungseinheit einer maximalen Anzahl von Übergängen eines zu überwachenden Bits des Werts des Zählers (CNT), wobei die maximale Anzahl von Übergängen einer gewünschten Wartezeit entspricht,
- eine Überwachung durch die zentrale Verarbeitungseinheit der Übergänge des zu überwachenden Bits des Werts des Zählers (CNT), um die Zeitverzögerung durchzuführen, bis die Anzahl der durchgeführten Übergänge des zu überwachenden Bits die festgelegte maximale Anzahl von Übergängen erreicht hat.

2. Verfahren nach Anspruch 1, wobei die gewünschte Wartezeit einer Stabilisierungszeit eines Peripheriegeräts (PRPH) des Computersystems (SYS) entspricht, wobei die Zeitverzögerung bei einem Zugriff der zentralen Verarbeitungseinheit (CPU) auf dieses Peripheriegerät (PRPH) implementiert wird.

3. Verfahren nach einem der Ansprüche 1 oder 2, wobei die Überwachung der Übergänge des zu überwachenden Bits eine Definition einer Maske umfasst, die es ermöglicht, das zu überwachende Bit zu isolieren, wenn die Maske auf den Wert des Zählers (CNT) des externen Taktkreises (EXT_CLK) angewendet wird.

4. Verfahren nach Anspruch 3, wobei die maximale Anzahl der Übergänge des zu überwachenden Bits anhand der folgenden Formel berechnet wird:

$$IDX = \left(\left(\text{DLY} \times \frac{\text{RLDV}}{\text{MSK}}\right) \gg 11\right) + 1,$$

wobei IDX die maximale Anzahl von Übergängen ist, DLY die gewünschte Zeit in Mikrosekunden, RLDV der Ladewert des Zählers CNT des externen Taktkreises EXT_CLK ist, der einer Millisekunde entspricht, und MSK der Wert der Maske des zu überwachenden Bits ist.

5. Verfahren nach einem der Ansprüche 1 bis 4, wobei die maximale Anzahl von Übergängen verwendet wird, um einen Index zu initialisieren, der es ermöglicht, die Anzahl von Übergänge zu zählen, die von dem zu überwachenden Bit des Zählers des externen Taktkreises ausgeführt werden.

6. Verfahren nach Anspruch 5, wobei die Überwachung der Übergänge des zu überwachenden Bits eine Implementierung einer Hauptschleife (PLP) umfasst, solange der Indexwert ungleich 0 ist, wobei die Hauptschleife (PLP) umfasst:

- eine Dekrementierung des Indexwerts (IDX),
- eine erste Sekundärschleife (SLP1), die implementiert wird, solange der Wert des zu überwachenden Bits gleich 0 ist,
- eine zweite Sekundärschleife (SLP2), die implementiert wird, solange der Wert des zu überwachenden Bits gleich 1 ist.

7. Computersystem, umfassend:

- eine zentrale Verarbeitungseinheit (CPU),
- einen externen Taktkreis (EXT_CLK), der einen Zähler (CNT) umfasst, wobei der Zähler (CNT) so konfiguriert ist, dass er seinen Wert bei jedem Takt des externen Taktkreises (EXT_CLK) in einem Wertebereich, der einer Millisekunde entspricht, erhöht oder verringert,
- einen Speicher (MEM), auf dem ein Computerprogramm (PRG) gespeichert ist, das Anweisungen umfasst, die, wenn sie von der zentralen Verarbeitungseinheit (CPU) ausgeführt werden, diese zu Folgendem veranlassen:
- Definieren einer maximalen Anzahl von Übergängen eines zu überwachenden Bits des Werts des Zählers (CNT), wobei die maximale Anzahl von Übergängen einer gewünschten Wartezeit entspricht,
- Überwachen der Übergänge des zu überwachenden Bits des Werts des Zählers (CNT), um die Zeitverzögerung durchzuführen, bis die Anzahl der durchgeführten Übergänge des zu überwachenden Bits die festgelegte maximale Anzahl von Übergängen erreicht hat.

8. Computersystem nach Anspruch 7, das ferner ein Peripheriegerät (PRPH) aufweist, das eine Stabilisierungszeit besitzt, wobei das Computerprogramm (PRG) Anweisungen umfasst, die, wenn sie von der zentralen Verarbeitungseinheit (CPU) ausgeführt werden, diese dazu veranlassen, die Zeitverzögerung bei einem Zugriff der zentralen Verarbeitungseinheit (CPU) auf das Peripheriegerät (PRPH) zu implementieren, wobei die gewünschte Wartezeit der Zeitverzögerung der Stabilisierungszeit des Peripheriegeräts (PRPH) entspricht.

9. Computersystem nach einem der Ansprüche 7 oder 8, wobei das Computerprogramm (PRG) Anweisungen umfasst, die, wenn sie von der zentralen Verarbeitungseinheit (CPU) ausgeführt werden, diese dazu veranlassen, eine Maske für den Wert des Zählers (CNT) des externen Taktkreises (EXT_CLK) zu definieren und auf diesen anzuwenden, um das zu überwachende Bit zu isolieren, um die Übergänge des zu überwachenden Bits zu überwachen.

10. Computersystem nach Anspruch 9, wobei das Computerprogramm (PRG) Anweisungen umfasst, die, wenn sie von der zentralen Verarbeitungseinheit (CPU) ausgeführt werden, diese dazu veranlassen, die maximale Anzahl von Übergängen des zu überwachenden Bits anhand der folgenden Formel zu berechnen:

$$IDX = \left( \left( DLY \times \frac{RLDV}{MSK} \right) \gg 11 \right) + 1,$$

wobei IDX die maximale Anzahl von Übergängen ist, DLY die gewünschte Zeit in Mikrosekunden, RLDV der Ladewert des Zählers CNT des externen Taktkreises EXT_CLK ist, der einer Millisekunde entspricht, und MSK der Wert der Maske des zu überwachenden Bits ist.

11. Computersystem nach einem der Ansprüche 7 bis 10, wobei das Computerprogramm (PRG) Anweisungen umfasst, die, wenn sie von der zentralen Verarbeitungseinheit (CPU) ausgeführt werden, diese dazu veranlassen, die maximale Anzahl von Übergängen zu verwenden, um einen Index zu initialisieren, der es ermöglicht, die Anzahl der von dem zu überwachenden Bit des Zählers (CNT) des externen Taktkreises ausgeführten Übergänge zu zählen.

12. Computersystem nach Anspruch 11, wobei das Computerprogramm (PRG) Anweisungen umfasst, die, wenn sie von der zentralen Verarbeitungseinheit (CPU) ausgeführt werden, diese dazu veranlassen, Übergänge des zu überwachenden Bits zu überwachen, indem eine Hauptschleife (PLP) implementiert wird, solange der Indexwert ungleich 0 ist, wobei die Hauptschleife (PLP) Folgendes umfasst:

- eine Dekrementierung des Indexwerts,
- eine erste Sekundärschleife (SLP1), die implementiert wird, solange der Wert des zu überwachenden Bits gleich 0 ist,
- eine zweite Sekundärschleife (SLP2), die implementiert wird, solange der Wert des zu überwachenden Bits gleich 1 ist.

13. Computerprogrammprodukt, das Anweisungen umfasst, die, wenn sie von einer zentralen Verarbeitungseinheit eines Computersystems implementiert werden, das auch einen externen Taktkreis (EXT_CLK) aufweist, der einen Zähler (CNT) umfasst, wobei der Zähler (CNT) so konfiguriert ist, dass er seinen Wert bei jedem Takt des externen Taktkreises (EXT_CLK) in einem Wertebereich, der einer Millisekunde entspricht, erhöht oder verringert, die zentrale Verarbeitungseinheit zu Folgendem veranlassen:

- Definieren einer maximalen Anzahl von Übergängen eines zu überwachenden Bits des Werts des Zählers (CNT), wobei die maximale Anzahl von Übergängen einer gewünschten Wartezeit entspricht,
- Überwachen der Übergänge des zu überwachenden Bits des Werts des Zählers (CNT), um eine Zeitverzögerung durchzuführen, bis die Anzahl der durchgeführten Übergänge des zu überwachenden Bits die festgelegte maximale Anzahl von Übergängen erreicht hat.

14. Computerprogrammprodukt nach Anspruch 13, das Anweisungen umfasst, die, wenn sie von der zentralen Verarbeitungseinheit (CPU) ausgeführt werden, diese dazu veranlassen, die Zeitverzögerung bei einem Zugriff der zentralen Verarbeitungseinheit (CPU) auf ein Peripheriegerät (PRPH) des Computersystems (SYS) zu implementieren, wobei die gewünschte Wartezeit der Zeitverzögerung einer Stabilisierungszeit des Peripheriegeräts (PRPH) entspricht.

15. Computerprogrammprodukt nach einem der Ansprüche 13 oder 14, das Anweisungen umfasst, die, wenn sie von der zentralen Verarbeitungseinheit (CPU) ausgeführt werden, diese dazu veranlassen, eine Maske für den Wert des Zählers (CNT) des externen Taktkreises (EXT_CLK) zu definieren und auf diesen anzuwenden, um das zu überwachende Bit zu isolieren, um die Übergänge des zu überwachenden Bits zu überwachen.

16. Computerprogrammprodukt nach Anspruch 15, das Anweisungen umfasst, die, wenn sie von der zentralen Verarbeitungseinheit (CPU) ausgeführt werden, diese dazu veranlassen, die maximale Anzahl von Übergängen des zu überwachenden Bits anhand der folgenden Formel zu berechnen:

$$IDX = \left( \left( DLY \times \frac{RLDV}{MSK} \right) \gg 11 \right) + 1,$$

wobei IDX die maximale Anzahl von Übergängen ist, DLY die gewünschte Zeit in Mikrosekunden, RLDV der Ladewert des Zählers CNT des externen Taktkreises EXT_CLK ist, der einer Millisekunde entspricht, und MSK der Wert der Maske des zu überwachenden Bits ist.

17. Computerprogrammprodukt nach einem der Ansprüche 13 bis 16, das Anweisungen umfasst, die, wenn sie von der zentralen Verarbeitungseinheit (CPU) ausgeführt werden, diese dazu veranlassen, die maximale Anzahl von Übergängen zu verwenden, um einen Index zu initialisieren, der es ermöglicht, die Anzahl der von dem zu überwachenden Bit des Zählers (CNT) des externen Taktkreises ausgeführten Übergänge zu zählen.

18. Computerprogrammprodukt nach Anspruch 17, das Anweisungen umfasst, die, wenn sie von der zentralen Verarbeitungseinheit (CPU) ausgeführt werden, diese dazu veranlassen, Übergänge des zu überwachenden Bits zu überwachen, indem eine Hauptschleife (PLP) implementiert wird, solange der Indexwert ungleich 0 ist, wobei die Hauptschleife (PLP) Folgendes umfasst:

- eine Dekrementierung des Indexwerts,
- eine erste Sekundärschleife (SLP1), die implementiert wird, solange der Wert des zu überwachenden Bits gleich 0 ist,
- eine zweite Sekundärschleife (SLP2), die implementiert wird, solange der Wert des zu überwachenden Bits gleich 1 ist.

**Claims**

1. A time-delay method implemented by a computing system (SYS) comprising:

- a central processing unit (CPU),
- an external clock circuit (EXT_CLK) comprising a counter, the counter (CNT) being configured to increment or decrement its value at each clock pulse of the external clock circuit (EXT_CLK) over a range of values corresponding to one millisecond,

the time-delay method comprising:

- defining, by the central processing unit, a maximum number of transitions of a bit to be monitored of the value of the counter (CNT), with the maximum number of transitions corresponding to a desired time out,
- monitoring, by the central processing unit, the transitions of the bit to be monitored of the value of the counter (CNT) so as to implement said time-delay until the number of transitions carried out of the bit to be monitored reaches the defined maximum number of transitions.

2. The method according to claim 1, wherein the desired time out corresponds to a stabilisation time of a peripheral (PRPH) of the computing system (SYS), said time-delay being implemented upon access by the central processing unit (CPU) to this peripheral (PRPH).

3. The method according to any of claims 1 or 2, wherein monitoring the transitions of the bit to be monitored comprises defining a mask for isolating the bit to be monitored when the mask is applied to the value of the counter (CNT) of the external clock circuit (EXT_CLK).

4. The method according to claim 3, wherein the maximum number of transitions of the bit to be monitored is calculated using the formula:

$$IDX = \left(\left(\text{DLY} \times \frac{\text{RLDV}}{\text{MSK}}\right) \gg 11\right) + 1,$$

where IDX is the maximum number of transitions, DLY is the desired time out in microseconds, RLDV is the loading value of the counter CNT of the external clock circuit EXT_CLK corresponding to one millisecond, and MSK is the value of the mask of the bit to be monitored.

5. The method according to one of claims 1 to 4, wherein said maximum number of transitions is used to initialise an index for counting the number of transitions performed by the bit to be monitored of the counter of the external clock circuit.

6. The method according to claim 5, wherein monitoring the transitions of the bit to be monitored comprises implementing a main loop (PLP) as long as the value of the index is different from 0, the main loop (PLP) comprising:

- a decrementation of the value of the index (IDX),
- a first secondary loop (SLP1) implemented as long as the value of the bit to be monitored is equal to 0,
- a second secondary loop (SLP2) implemented as long as the value of the bit to be monitored is equal to 1.

7. A computing system comprising:

- a central processing unit (CPU),
- an external clock circuit (EXT_CLK) comprising a counter (CNT), the counter (CNT) being configured to increment or decrement its value at each clock pulse of the external clock circuit (EXT_CLK) over a range of values corresponding to one millisecond,
- a memory (MEM) storing a computer program (PRG) comprising instructions which, when executed by the central processing unit (CPU), cause the same to:
- define a maximum number of transitions of a bit to be monitored of the value of the counter (CNT), the maximum number of transitions corresponding to a desired time out,
- monitor the transitions of the bit to be monitored of the value of the counter (CNT) so as to carry out said time delay until the number of transitions carried out of the bit to be monitored reaches the defined maximum number of transitions.

8. The computing system according to claim 7, further including a peripheral (PRPH) having a stabilisation time, the computer program (PRG) comprising instructions which, when executed by the central processing unit (CPU), cause the same to implement said time delay upon access by the central processing unit (CPU) to the peripheral (PRPH), the desired time out for the time delay corresponding to the stabilisation time of the peripheral (PRPH).

9. The computing system according to any of claims 7 or 8, wherein the computer program (PRG) comprises instructions which, when executed by the central processing unit (CPU), cause the same to define and apply a mask to the value of the counter (CNT) of the external clock circuit (EXT_CLK) to isolate the bit to be monitored in order to track the transitions of the bit to be monitored.

10. The computing system according to claim 9, wherein the computer program (PRG) comprises instructions which, when executed by the central processing unit (CPU), cause the same to calculate the maximum number of transitions of the bit to be monitored using the formula:

$$IDX = \left( \left( DLY \times \frac{RLDV}{MSK} \right) \gg 11 \right) + 1,$$

where IDX is the maximum number of transitions, DLY is the desired time out in microseconds, RLDV is the loading value of the counter CNT of the external clock circuit EXT_CLK corresponding to one millisecond, and MSK is the value of the mask of the bit to be monitored.

11. The computing system according to one of claims 7 to 10, wherein the computer program (PRG) comprises instructions which, when executed by the central processing unit (CPU), cause the same to use said maximum number of transitions to initialise an index for counting the number of transitions performed by the bit to be monitored of the counter (CNT) of the external clock circuit.

12. The computing system according to claim 11, wherein the computer program (PRG) comprises instructions which, when executed by the central processing unit (CPU), cause the same to monitor transitions of the bit to be monitored by implementing a main loop (PLP) as long as the value of the index is different from 0, the main loop (PLP) comprising:

- a decrementation of the value of the index,
- a first secondary loop (SLP1) implemented as long as the value of the bit to be monitored is equal to 0,
- a second secondary loop (SLP2) implemented as long as the value of the bit to be monitored is equal to 1.

13. A computer program product comprising instructions which, when implemented by a central processing unit of a computing system also including an external clock circuit (EXT_CLK) comprising a counter (CNT), the counter (CNT) being configured to increment or decrement its value at each clock pulse of the external clock circuit (EXT_CLK) over a range of values corresponding to one millisecond, causes the central processing unit to:

- define a maximum number of transitions of a bit to be monitored of the value of the counter (CNT), the maximum number of transitions corresponding to a desired time out,
- monitor the transitions of the bit to be monitored of the value of the counter (CNT) so as to carry out a time delay until the number of transitions carried out of the bit to be monitored reaches the defined maximum number of transitions.

14. The computer program product according to claim 13, comprising instructions which, when executed by the central processing unit (CPU), cause the same to implement said time delay upon access of the central processing unit (CPU) to a peripheral (PRPH) of the computing system (SYS), the desired time out for the time delay corresponding to a stabilisation time of the peripheral (PRPH).

15. The computer program product according to any of claims 13 or 14, comprising instructions which, when executed by the central processing unit (CPU), cause the same to define and apply a mask to the value of the counter (CNT) of the external clock circuit (EXT_CLK) to isolate the bit to be monitored in order to track the transitions of the bit to be monitored.

16. The computer program product according to claim 15, comprising instructions which, when executed by the central processing unit (CPU), cause the same to calculate the maximum number of transitions of the bit to be monitored using the formula:

$$IDX = \left( \left( DLY \times \frac{RLDV}{MSK} \right) \gg 11 \right) + 1,$$

where IDX is the maximum number of transitions, DLY is the desired time out in microseconds, RLDV is the loading value of the counter CNT of the external clock circuit EXT_CLK corresponding to one millisecond, and MSK is the value of the mask of the bit to be monitored.

17. The computer program product according to one of claims 13 to 16, comprising instructions which, when executed by the central processing unit (CPU), cause the same to use said maximum number of transitions to initialise an index for counting the number of transitions performed by the bit to be monitored of the counter (CNT) of the external clock circuit.

18. The computer program product according to claim 17, comprising instructions which, when executed by the central processing unit (CPU), cause the same to monitor transitions of the bit to be monitored by implementing a main loop (PLP) as long as the value of the index is different from 0, the main loop (PLP) comprising:

    - a decrementation of the value of the index,
    - a first secondary loop (SLP1) implemented as long as the value of the bit to be monitored is equal to 0,
    - a second secondary loop (SLP2) implemented as long as the value of the bit to be monitored is equal to 1.

[Fig. 1]

[Fig. 2]

[Fig. 3]